(19) Europäisches Patentamt
European Patent Office
Office européen des brevets

(11) EP 4 306 607 A1

(12) **EUROPEAN PATENT APPLICATION**
published in accordance with Art. 153(4) EPC

(43) Date of publication:
**17.01.2024 Bulletin 2024/03**

(21) Application number: **22766955.3**

(22) Date of filing: **02.03.2022**

(51) International Patent Classification (IPC):
***C09J 175/04*** *(2006.01)* ***C08G 18/10*** *(2006.01)*
***C08G 18/32*** *(2006.01)* ***C08G 18/48*** *(2006.01)*
***C08G 18/65*** *(2006.01)* ***C08G 18/76*** *(2006.01)*

(52) Cooperative Patent Classification (CPC):
**C08G 18/10; C08G 18/32; C08G 18/48; C08G 18/65; C08G 18/76; C09J 175/04**

(86) International application number:
**PCT/JP2022/008894**

(87) International publication number:
**WO 2022/190996 (15.09.2022 Gazette 2022/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.03.2021 JP 2021038419**

(71) Applicant: **Sika Technology AG**
**6340 Baar (CH)**

(72) Inventor: **TSUSHIMA Daisuke**
**Hiratsuka-shi, Kanagawa 254-0014 (JP)**

(74) Representative: **Sika Patent Attorneys**
**c/o Sika Technology AG**
**Corp. IP Dept.**
**Tüffenwies 16**
**Postfach**
**8048 Zürich (CH)**

(54) **URETHANE ADHESIVE COMPOSITION**

(57) The purpose of the present invention is to provide a urethane adhesive composition that can suppress a reduction in physical properties of an obtained cured product even if the mixing ratio between a main agent and a curing agent deviates from the design range. The present invention is a two-liquid type urethane adhesive composition comprising a main agent and a curing agent. The main agent comprises a poly isocyanate component, and the isocyanate group content in the main agent is 5 mass% or more of the total amount of the main agent. The curing agent contains a compound having a plurality of active hydrogen-containing groups per molecule, and the compound having a plurality of active hydrogen-containing groups per molecule comprises a high molecular weight polyol having two or three hydroxyl groups per molecule and a number average molecular weight of 1800 or greater, a low molecular weight polyol A having two hydroxyl groups per molecule and a number average molecular weight of 200 or less, and a low molecular weight polyol B having three hydroxyl groups per molecule, with at least one of the three hydroxyl groups being secondary hydroxyl groups, and a number average molecular weight of 1200 or less.

EP 4 306 607 A1

## Description

### Technical Field

The present invention relates to a urethane adhesive composition.

### Background Art

Two-liquid urethane-based compositions have been used as adhesives in the past, and a two-part polyurethane has been proposed in, for example, Patent Document 1.

### Citation List

### Patent Literature

[Patent Document 1] JP 2010-534741 A

### Summary of Invention

### Problems to be Solved by the Invention

Two-liquid urethane adhesive compositions having a main agent and a curing agent (a curing agent in a broad sense) require excellent adhesive strength and elastic modulus, but the level of these requirements has increased in recent years.

High adhesive strength and elastic modulus are achieved by said urethane-based adhesive compositions by increasing the density of urethane bonds or urea bonds that form hard segments in cured products.

An example of a means for increasing the density of urethane bonds or the like is a method comprising designing the number of isocyanate-reactive groups in the curing agent and the number of isocyanate groups in the main agent in a two-liquid state, or designing the mixing ratio of the main agent and the curing agent so that the number of isocyanate-reactive groups in the curing agent is similar to the number of isocyanate groups in the main agent.

Among such methods, the inventor of the present invention found that when a urethane adhesive composition was prepared and evaluated with reference to Patent Document 1, physical properties (for example, fracture strength and elastic modulus) of an obtained cured product when the mixing ratio of the main agent and the curing agent fell outside a designed range were, in some cases, significantly lower than a case where the main agent and the curing agent were used at the designed mixing ratio.

Therefore, the purpose of the present invention is to provide a urethane adhesive composition with which it is possible to suppress a reduction in physical properties of an obtained cured product, even if the mixing ratio of the main agent and the curing agent falls outside the designed range.

### Means for Solving the Problems

As a result of diligent research carried out in order to solve the problem mentioned above, the inventor of the present invention found that by incorporating a specific high molecular weight polyol and two types of specific low molecular weight polyol in a curing agent in a two-liquid urethane adhesive composition in which a main agent has a high isocyanate group content, it was possible to achieve the effect that a deterioration in physical properties of an obtained cured product could be suppressed even if the mixing ratio of the main agent and the curing agent fell outside the designed range, and thereby achieved the present invention.

Based on the findings etc. mentioned above, the present invention can solve the problem mentioned above by virtue of the specific features described below.

[1] A two-liquid type urethane adhesive composition comprising a main agent and a curing agent, wherein

the main agent contains a polyisocyanate component, and the isocyanate group content in the main agent is 5 mass% or more of the total amount of the main agent,

the curing agent contains a compound having a plurality of active hydrogen-containing groups per molecule, and the compound having a plurality of active hydrogen-containing groups per molecule comprises:

a high molecular weight polyol having 2-3 hydroxyl groups per molecule and having a number average

molecular weight of 1800 or more,

a low molecular weight polyol A having two hydroxyl groups per molecule and having a number average molecular weight of 200 or less, and

a low molecular weight polyol B having three hydroxyl groups per molecule, with at least one, or all, of the three hydroxyl groups being secondary hydroxyl groups, and having a number average molecular weight of 1200 or less.

[2] The urethane adhesive composition according to [1], wherein the low molecular weight polyol B contains:

an aliphatic hydrocarbon-based triol B1 which has a number average molecular weight of 1200 or less and which has three hydroxyl groups per molecule and a trivalent aliphatic hydrocarbon group having three or more carbon atoms, wherein the three hydroxyl groups are bonded to the trivalent aliphatic hydrocarbon group, and at least one, or all, of the three hydroxyl groups are secondary hydroxyl groups, and/or

a polyoxyalkylene triol B2 which has a number average molecular weight of 1200 or less and which has three hydroxyl groups per molecule and a trivalent polyoxyalkylene group, wherein the three hydroxyl groups independently form -R-OH moieties, the R moieties independently denote divalent alkylene groups, at least one, or all, of the three hydroxyl groups are secondary hydroxyl groups, and the -R-OH moieties are bonded to the trivalent polyoxyalkylene group.

[3] The urethane adhesive composition according to [1] or [2], wherein the low molecular weight polyol B contains glycerin.

[4] The urethane adhesive composition according to any one of [1] to [3], wherein the low molecular weight polyol A contains an alkane diol.

[5] The urethane adhesive composition according to any one of [1] to [4], wherein the low molecular weight polyol A contains 1,4-butane diol.

[6] The urethane adhesive composition according to any one of [1] to [5], wherein the polyisocyanate component contains at least one type selected from the group consisting of a urethane prepolymer, diphenylmethane diisocyanate, a polymeric MDI and a modified MDI.

[7] The urethane adhesive composition according to any one of [1] to [6], wherein the high molecular weight polyol contains a polyoxyalkylene polyol which has three hydroxyl groups per molecule and has a number average molecular weight of 4800 or more.

[8] The urethane adhesive composition according to any one of [1] to [7], wherein the amount of hydroxyl groups in the low molecular weight polyol B is 3.0-90.0 mol% of the total amount of hydroxyl groups in the low molecular weight polyol A and the low molecular weight polyol B.

[9] The urethane adhesive composition according to any one of [1] to [8], wherein the molar ratio of isocyanate-reactive groups in the curing agent relative to all isocyanate groups in the main agent (isocyanate-reactive groups/NCO) is 0.8-1.1.

[10] The urethane adhesive composition according to any one of [1] to [9], wherein the amount of hydroxyl groups in the low molecular weight polyol B is 30-90 mol% of the total amount of hydroxyl groups in the high molecular weight polyol and the low molecular weight polyol B.

[11] The urethane adhesive composition according to any one of [1] to [10], wherein the elastic modulus following complete curing is 15 MPa or more.

## Advantageous Effects of Invention

Even if the mixing ratio of the main agent and the curing agent in the urethane adhesive composition of the present invention falls outside the designed range, it is possible to suppress a reduction in physical properties of an obtained cured product.

## Embodiments of the Invention

The present invention will now be described in detail.

It should be noted that numerical ranges expressed using the symbol "-" refer to ranges that include the numerical values before and after the -" as lower and upper limits of the range.

In the present specification, methods for producing components are not particularly limited unless explicitly stated otherwise. For example, conventional well known methods can be used.

In the present specification, a component can be a single substance that corresponds to the component or a combination of two or more such substances, unless explicitly stated otherwise. In a case where a component contains

two or more substances, the content of the component means the total content of the two or more substances.

In the present specification, being able to suppress a reduction in physical properties of an obtained cured product even if the mixing ratio of the main agent and the curing agent falls outside the designed range means that the effect achieved by the present invention is superior.

[Urethane adhesive composition]

The urethane adhesive composition of the present invention (the composition of the present invention) is

a two-liquid type urethane adhesive composition comprising a main agent and a curing agent, wherein
the main agent contains a polyisocyanate component, and the isocyanate group content in the main agent is 5 mass% or more of the total amount of the main agent,
the curing agent contains a compound having a plurality of active hydrogen-containing groups per molecule, and the compound having a plurality of active hydrogen-containing groups per molecule comprises:

a high molecular weight polyol having 2-3 hydroxyl groups per molecule and having a number average molecular weight of 1800 or more,
a low molecular weight polyol A having two hydroxyl groups per molecule and having a number average molecular weight of 200 or less, and
a low molecular weight polyol B having three hydroxyl groups per molecule, with at least one, or all, of the three hydroxyl groups being secondary hydroxyl groups, and having a number average molecular weight of 1200 or less.

The composition of the present invention will now be described in detail.

The composition of the present invention is a two-liquid type urethane adhesive composition comprising a main agent and a curing agent. The curing agent in the composition of the present invention means a curing agent in a broad sense. The curing agent (in a broad sense) in the composition of the present invention includes a curing agent (a curing agent in a narrow sense) that reacts with the polyisocyanate component contained in the main agent.

<<Main agent>>

In the present invention, the main agent contains a polyisocyanate component.

<Polyisocyanate component>

In the present invention, the polyisocyanate component contained in the main agent is a compound having a plurality of isocyanate groups per molecule. Examples of the polyisocyanate component include a urethane prepolymer and a polyisocyanate used when producing the urethane prepolymer.

(Polyisocyanate: polyisocyanate component)

In the present specification, the polyisocyanate that serves as the polyisocyanate component denotes a low molecular weight compound having a plurality of isocyanate groups per molecule. It should be noted that urethane prepolymers are excluded from the polyisocyanate.

Examples of the polyisocyanate include aromatic polyisocyanates such as toluene diisocyanate (TDI), diphenylmethane diisocyanate (unsubstituted MDI; also known as pure MDI or monomeric MDI), 1,4-phenylene diisocyanate, polymethylene polyphenylene polyisocyanate, xylylene diisocyanate (XDI), tetramethylxylylene diisocyanate (TMXDI), tolidine diisocyanate (TODI), 1,5-naphthalene diisocyanate (NDI), triphenylmethane triisocyanate, polymeric MDI (a compound obtained by increasing the molecular weight of diphenylmethane diisocyanate (pure MDI)), modified MDI (for example, isocyanurate-modified MDI (a MDI trimer) obtained by modifying diphenylmethane diisocyanate (pure MDI), carbodiimide-modified MDI, urethane-modified MDI, and so on); and
aliphatic and/or alicyclic polyisocyanates such as hexamethylene diisocyanate (HDI), trimethylhexamethylene diisocyanate (TMHDI), lysine diisocyanate, norbornane diisocyanate (NBDI), trans-cyclohexane-1,4-diisocyanate, isophorone diisocyanate (IPDI), bis(isocyanatomethyl)cyclohexane ($H_6XDI$), dicyclohexylmethane diisocyanate ($H_{12}MDI$), and carbodiimide-modified products and isocyanurate-modified products of these.

It should be noted that said polymeric MDI is not included in said modified MDI.

(Urethane prepolymer)

The urethane prepolymer that serves as the polyisocyanate component is a urethane-based compound having a plurality of isocyanate groups per molecule.

In the urethane prepolymer, the bonding position of an isocyanate group is not particularly limited, but an embodiment in which the isocyanate group is bonded to a terminal of the urethane prepolymer can be given as an example of a preferred embodiment.

Conventional well-known compounds can be given as examples of the urethane prepolymer. Specifically, it is possible to use a reaction product or the like obtained by reacting, for example, a polyisocyanate with a compound having a plurality of active hydrogen-containing groups per molecule (hereinafter, this may be referred to as an "active hydrogen compound") at quantities whereby that the amount of isocyanate groups is greater than the amount of active hydrogen-containing groups.

· Active hydrogen-containing group

In the present invention, an active hydrogen-containing group means a group containing active hydrogen. Examples of active hydrogen-containing groups include hydroxyl groups, amino groups and imino groups.

· Polyisocyanate (urethane prepolymer raw material)

Polyisocyanates able to be used when producing the urethane prepolymer are not particularly limited as long as these have a plurality of isocyanate groups in the molecule. Examples thereof include compounds similar to those listed in the "(Polyisocyanate: polyisocyanate component)" section above.

From the perspective of the present invention achieving a superior effect, polyisocyanates able to be used for producing the urethane prepolymer are preferably aromatic polyisocyanates, more preferably include at least one type selected from the group consisting of diphenylmethane diisocyanate (pure MDI), a polymeric MDI and a modified MDI, and further preferably include diphenylmethane diisocyanate (pure MDI) or a modified MDI.

· Active hydrogen compound (urethane prepolymer raw material)

Compounds having a plurality of active hydrogen-containing groups per molecule (active hydrogen compounds) able to be used when producing the urethane prepolymer are not particularly limited. Examples of active hydrogen-containing groups include hydroxyl (OH) groups, amino groups and imino groups.

Preferred examples of active hydrogen compounds that serve as raw materials for the urethane prepolymer include polyol compounds having a plurality of hydroxyl (OH) groups per molecule and polyamine compounds having a plurality of amino groups and/or imino groups per molecule. Of these, a polyol compound is preferred.

The polyol compound is not particularly limited as long as it is a compound having a plurality of OH groups. Specific examples of polyol compounds include polyether polyols; polyester polyols; (meth)acrylic polyols; polybutadiene polyols and hydrogenated polybutadiene polyols; low molecular weight alcohols; and mixtures of these polyols. Of these, a polyether polyol can be given as an example of a preferred embodiment.

The polyether polyol is not particularly limited as long as it is a compound which has a polyether as a main chain and has a plurality of hydroxyl groups. A polyether is a group having a plurality of ether bonds, and specific examples thereof include groups having a plurality of $-R^a-O-R^b-$ structural units. Here, $R^a$ and $R^b$ in said structural unit each independently denote a hydrocarbon group. The hydrocarbon groups are not particularly limited. A straight chain alkylene group having 1-10 carbon atoms can be given as an example.

Examples of polyether polyols include polyoxyethylene diol (polyethylene glycol); polyoxypropylene diol (polypropylene glycol; PPG); polyoxypropylene triol; polyoxyalkylene-based tetraols; ethylene oxide/propylene oxide copolymer polyols; polytetramethylene ether glycol (PTMEG), polytetraethylene glycol and sorbitol-based polyols.

From the perspective of excellent compatibility with the polyisocyanate, polypropylene glycol and polyoxypropylene triol are preferred as polyether polyols able to be used when producing the urethane prepolymer.

From the perspectives of the present invention achieving a superior effect and an obtained cured product having high fracture elongation, the weight average molecular weight of the active hydrogen compound (for example, a polyether polyol) that serves as a raw material for the urethane prepolymer is preferably 500-20,000, and more preferably 4800-12,000.

In the present invention, the number average molecular weight of the active hydrogen compound can be a standard polystyrene equivalent value obtained from gel permeation chromatography (GPC) measurements under the following conditions.

- Solvent: tetrahydrofuran
- Detector: RI detector

(Preferred embodiment of polyisocyanate component)

From the perspectives of the present invention achieving a superior effect, adhesion development performance being excellent (the speed at which adhesive properties develop is rapid; hereinafter the same) and physical properties of an obtained cured product (for example, fracture elongation) being excellent, the polyisocyanate component preferably includes at least one type selected from the group consisting of a urethane prepolymer, diphenylmethane diisocyanate, a polymeric MDI and a modified MDI, and more preferably includes a urethane prepolymer and at least one type of polyisocyanate selected from the group consisting of diphenylmethane diisocyanate, a polymeric MDI and a modified MDI.

· Method for producing polyisocyanate component

The method for producing the polyisocyanate component is not particularly limited. For example, in a case where the polyisocyanate component contains at least the urethane prepolymer, the polyisocyanate component containing at least the urethane prepolymer can be produced by using a polyisocyanate (raw material) at a quantity whereby the amount of isocyanate groups is 1.5-25.0 moles relative to 1 mole of active hydrogen-containing groups in the active hydrogen compound (raw material), and mixing and reacting these at a temperature of, for example, 60-100°C. A plasticizer may also be used in this production method.

In a case where the polyisocyanate component contains at least the urethane prepolymer, the amounts of the active hydrogen compound and polyisocyanate used as raw materials in the method for producing the polyisocyanate component reflect the amount of obtained polyisocyanate component (which may contain unreacted polyisocyanate in addition to the urethane prepolymer).

In addition, further polyisocyanate may be separately added to the polyisocyanate component following production.

<Isocyanate group content in main agent>

The isocyanate group content in the main agent in the present invention is 5 mass% or more of the total amount of the main agent. By setting the isocyanate group content to be that mentioned above, the present invention achieves an excellent effect and it is possible to increase the adhesive strength and elastic modulus of an obtained cured product.

The isocyanate group content in the main agent is the mass percentage of isocyanate groups in the polyisocyanate component contained in the main agent relative to the total amount of the main agent.

The isocyanate group content in the main agent is preferably 5-25 mass%, and more preferably 8-20 mass%, of the total amount of the main agent from the perspectives of the present invention achieving a superior effect, enabling the adhesive strength and elastic modulus of an obtained cured product to be increased, and adhesion development performance being excellent.

· Method for calculating isocyanate group content in (total amount of) main agent

The isocyanate group content in the main agent can be determined by first measuring the isocyanate group content (mass%) in the polyisocyanate component (for example, the urethane prepolymer that may also contain unreacted polyisocyanate) in accordance with method A in JIS K-1603-1:2007 using a potentiometric titration apparatus, and then applying the measurement results to the formula shown below so as to calculate the isocyanate group content (mass%) in the main agent.

$$\text{(Formula) Isocyanate group content (mass\%) in total amount of main agent} = V \times W / X \times 100$$

[V] Isocyanate group content (mass%) in polyisocyanate component
[W] Amount (parts by mass) of polyisocyanate component used in main agent
[X] Total amount (parts by mass) of main agent

<<Curing agent>>

In the present invention, the curing agent (in a broad sense) in the composition of the present invention includes a compound having a plurality of active hydrogen-containing groups per molecule as a curing agent in a narrow sense.

The curing agent in a narrow sense has a functional group able to react with an isocyanate group (an isocyanate-reactive group). Examples of isocyanate-reactive groups include hydroxyl groups, amino groups and imino groups.
In addition, in the present invention, a compound having a plurality of active hydrogen-containing groups per molecule (which is a curing agent in a narrow sense) contains a high molecular weight polyol having 2-3 hydroxyl groups per molecule and having a number average molecular weight of 1800 or more,

a low molecular weight polyol A having two hydroxyl groups per molecule and having a number average molecular weight of 200 or less, and
a low molecular weight polyol B having three hydroxyl groups per molecule, with at least one, or all, of the three hydroxyl groups being secondary hydroxyl groups, and having a number average molecular weight of 1200 or less.

The present invention achieves a superior effect because the composition of the present invention contains the three types of polyol mentioned above (the high molecular weight polyol and low molecular weight polyols A and B).
It should be noted that the high molecular weight polyol does not encompass low molecular weight polyol A or B in the present invention. In addition, low molecular weight polyol A does not encompass low molecular weight polyol B. Low molecular weight polyol B does not encompass low molecular weight polyol A.

<High molecular weight polyol>

In the present invention, the high molecular weight polyol that is contained as a curing agent in a narrow sense is a compound which has 2-3 hydroxyl groups per molecule and has a number average molecular weight of 1800 or more.
Because the composition of the present invention contains the high molecular weight polyol, the effect achieved by the present invention is excellent. In addition, it is possible to improve physical properties (for example, elastic modulus and fracture elongation) of an obtained cured product.

<Hydroxyl groups>

From the perspectives of the present invention achieving a superior effect and an obtained cured product exhibiting excellent physical properties (for example, elastic modulus and fracture elongation), the high molecular weight polyol preferably has three hydroxyl groups per molecule.

<Number average molecular weight of high molecular weight polyol>

From the perspectives of the present invention achieving a superior effect, adhesion development performance being excellent and an obtained cured product exhibiting excellent physical properties (for example, elastic modulus and fracture elongation), the number average molecular weight of the high molecular weight polyol is preferably 3000-20,000 and more preferably 4800-12,000.
In the present invention, the number average molecular weight of a polyol that serves as a curing agent in a narrow sense (for example, the high molecular weight polyol or low molecular weight polyols A and B) can be a standard polystyrene equivalent value obtained from gel permeation chromatography (GPC) measurements under the following conditions.

- Solvent: tetrahydrofuran
- Detector: RI detector

From the perspectives of the present invention achieving a superior effect and an obtained cured product exhibiting excellent physical properties (for example, elastic modulus and fracture elongation), the high molecular weight polyol preferably includes a polyoxyalkylene polyol (a polyoxyalkylene triol), more preferably includes polyoxypropylene triol, and further preferably includes a triol of an oxypropylene oxyethylene copolymer having oxyethylene groups in addition to oxypropylene groups as repeating units able to constitute the main chain.
From the perspectives of the present invention achieving a superior effect, adhesion development performance being excellent and an obtained cured product exhibiting excellent physical properties (for example, elastic modulus and fracture elongation), the high molecular weight polyol preferably includes a polyoxyalkylene polyol (polyoxyalkylene triol) which has three hydroxyl groups per molecule and has a number average molecular weight of 3000 or more, and more preferably includes a polyoxypropylene triol which has three hydroxyl groups per molecule and has a number average molecular weight of 4800-20,000. In addition, the polyoxypropylene triol preferably has oxyethylene groups in addition to oxypropylene groups as repeating units able to constitute the main chain.

<Low molecular weight polyol A>

In the present invention, the low molecular weight polyol A that is contained as a curing agent in a narrow sense is a compound which has two hydroxyl groups per molecule and has a number average molecular weight of 200 or less.
The low molecular weight polyol A is a diol having two hydroxyl groups per molecule.

<Number average molecular weight of low molecular weight polyol A>

In the present invention, the number average molecular weight of the low molecular weight polyol A is 200 or less.
From the perspectives of the present invention achieving a superior effect, adhesion development performance being excellent and an obtained cured product exhibiting excellent physical properties (for example, fracture elongation), the number average molecular weight of the low molecular weight polyol A is preferably 48-150.

<Two hydroxyl groups>

· Linking group (skeleton of low molecular weight polyol A)

In the low molecular weight polyol A, the hydroxyl groups can be bonded to a divalent linking group.
From the perspectives of the present invention achieving a superior effect, adhesion development performance being excellent and an obtained cured product exhibiting excellent physical properties (for example, fracture elongation), the divalent linking group is preferably a divalent alkylene group.
In the low molecular weight polyol A, the two hydroxyl groups may be bonded to any carbon atom in the divalent alkylene group, and are more preferably bonded to both terminals of a straight chain alkylene group.
Examples of the hydroxyl groups in the low molecular weight polyol A include primary and secondary hydroxyl groups.
In the present specification, a secondary hydroxyl group is an OH group bonded to C** in C-C**H-C. A primary hydroxyl group is an OH group bonded to C* in $-C^*H_2$.
From the perspectives of the present invention achieving a superior effect, adhesion development performance being excellent and an obtained cured product exhibiting excellent physical properties (for example, fracture elongation), the low molecular weight polyol A preferably includes a compound in which a hydroxyl group is bonded to each terminal of a straight chain alkylene group.
From the perspectives of the present invention achieving a superior effect, adhesion development performance being excellent and an obtained cured product exhibiting excellent physical properties (for example, fracture elongation), the low molecular weight polyol A preferably includes an alkane diol. An alkane diol is a compound in which two hydroxyl groups are bonded to a divalent alkylene group.
In the same way as in the low molecular weight polyol A, the two hydroxyl groups in the alkane diol may be bonded to any carbon atom in the divalent alkylene group, and are preferably bonded to both terminals of a straight chain alkylene group (in this case, the hydroxyl groups are primary hydroxyl groups). In the same way as in the low molecular weight polyol A, the alkane diol preferably includes a compound in which a hydroxyl group is bonded to each terminal of a straight chain alkylene group.
Examples of alkane diols include ethylene glycol, propylene glycol, butane diol, pentane diol, hexane diol and octane diol.
From the perspectives of the present invention achieving a superior effect, adhesion development performance being excellent and an obtained cured product exhibiting excellent physical properties (for example, fracture elongation), the low molecular weight polyol A (for example, an alkane diol) preferably includes butane diol, and more preferably includes 1,4-butane diol.

<Low molecular weight polyol B>

In the present invention, the low molecular weight polyol B that is contained as a curing agent in a narrow sense is a compound which has three hydroxyl groups per molecule, with at least one, or all, of the three hydroxyl groups being secondary hydroxyl groups, and has a number average molecular weight of 1200 or less.
The low molecular weight polyol B is a triol having three hydroxyl groups per molecule.

<Number average molecular weight of low molecular weight polyol B>

In the present invention, the number average molecular weight of the low molecular weight polyol B is 1200 or less.

From the perspectives of the present invention achieving a superior effect, adhesion development performance being excellent and an obtained cured product exhibiting excellent physical properties (for example, fracture elongation), the number average molecular weight of the low molecular weight polyol B is preferably 80-1200.

In cases where the low molecular weight polyol B contains an aliphatic hydrocarbon-based triol B1 described later, the number average molecular weight of the aliphatic hydrocarbon-based triol B1 is preferably 80-300 from the perspectives of the present invention achieving a superior effect, adhesion development performance being excellent and an obtained cured product exhibiting excellent physical properties (for example, fracture elongation).

In cases where the low molecular weight polyol B contains a polyoxyalkylene triol B2 described later, the number average molecular weight of the polyoxyalkylene triol B2 is preferably 500-1200 from the perspectives of the present invention achieving a superior effect, adhesion development performance being excellent and an obtained cured product exhibiting excellent physical properties (for example, fracture elongation).

<Secondary hydroxyl groups>

In the present invention, at least one, or all, of the three hydroxyl groups in the low molecular weight polyol B are secondary hydroxyl groups, that is, are OH groups bonded to C** in C-C**H-C.

The low molecular weight polyol B can have one, two or three secondary hydroxyl groups per molecule.

In cases where the low molecular weight polyol B contains an aliphatic hydrocarbon-based triol B1 described later, the aliphatic hydrocarbon-based triol B1 preferably has one secondary hydroxyl group from the perspectives of the present invention achieving a superior effect, adhesion development performance being excellent and an obtained cured product exhibiting excellent physical properties (for example, fracture elongation).

In cases where the low molecular weight polyol B contains a polyoxyalkylene triol B2 described later, the polyoxyalkylene triol B2 preferably has three secondary hydroxyl groups from the perspectives of the present invention achieving a superior effect, adhesion development performance being excellent and an obtained cured product exhibiting excellent physical properties (for example, fracture elongation).

<Primary hydroxyl groups>

In cases where the low molecular weight polyol B has one or two secondary hydroxyl groups, the remaining hydroxyl groups are not particularly limited. However, the remaining hydroxyl groups are not secondary hydroxyl groups. A case where the remaining hydroxyl groups are primary hydroxyl groups (OH groups bonded to C* in - $C^*_2$) can be given as an example of a preferred embodiment.

(Linking group: skeleton of low molecular weight polyol B)

In the low molecular weight polyol B, the three hydroxyl groups can be bonded to a trivalent linking group.

From the perspectives of the present invention achieving a superior effect, adhesion development performance being excellent and an obtained cured product exhibiting excellent physical properties (for example, fracture elongation), the trivalent linking group is preferably a trivalent aliphatic hydrocarbon group (a residue obtained by removing three hydrogen atoms from an aliphatic hydrocarbon) or a trivalent polyoxyalkylene group.

· Trivalent aliphatic hydrocarbon group

The number of carbon atoms in the trivalent aliphatic hydrocarbon group is three or more, and is preferably 3-6 from the perspectives of the present invention achieving a superior effect, adhesion development performance being excellent and an obtained cured product exhibiting excellent physical properties (for example, fracture elongation).

The trivalent aliphatic hydrocarbon group that serves as a linking group in the low molecular weight polyol B may be saturated or unsaturated, and may be straight chain, branched, cyclic, or a combination of these.

In cases where the linking group is a trivalent aliphatic hydrocarbon group, the linking group being a trivalent straight chain saturated aliphatic hydrocarbon group can be given as an example of a preferred embodiment.

· Trivalent polyoxyalkylene group

In the trivalent polyoxyalkylene group that serves as a linking group in the low molecular weight polyol B, oxyalkylene groups able to constitute the polyoxyalkylene group are not particularly limited. Examples thereof include oxyalkylene groups having 2-6 carbon atoms, such as oxyethylene groups and oxypropylene groups.

· · -R-OH

As an example of a preferred embodiment which can be given in a case where the low molecular weight polyol B has a trivalent polyoxyalkylene group as a linking group, the three hydroxyl groups in the low molecular weight polyol B independently form -R-OH moieties, where R moieties each independently denote a divalent aliphatic hydrocarbon group, at least one, or all, of the three hydroxyl groups are secondary hydroxyl groups, and each -R-OH moiety is bonded to the trivalent polyoxyalkylene group.

Each R in -R-OH moieties independently denotes a divalent aliphatic hydrocarbon group. The divalent aliphatic hydrocarbon groups may be saturated or unsaturated, and may be straight chain, branched, cyclic, or a combination of these.

In cases where R is a divalent aliphatic hydrocarbon group, R being a divalent branched saturated aliphatic hydrocarbon group can be given as an example of a preferred embodiment.

In a case where R is a divalent branched saturated aliphatic hydrocarbon group, examples of -R-OH include $-CH_2-CH(CH_3)-OH$, $-CH_2-CH_2-CH(CH_3)-OH$ and $-CH_2-CH(OH)-CH_2(CH_3)$.

From the perspectives of the present invention achieving a superior effect, adhesion development performance being excellent and an obtained cured product exhibiting excellent physical properties (for example, fracture elongation), the three hydroxyl groups in the low molecular weight polyol B are preferably bonded to a trivalent aliphatic hydrocarbon group.

From the perspectives of the present invention achieving a superior effect, adhesion development performance being excellent and an obtained cured product exhibiting excellent physical properties (for example, fracture elongation), the low molecular weight polyol B preferably contains:

an aliphatic hydrocarbon-based triol B1 which has a number average molecular weight of 1200 or less and which has three hydroxyl groups per molecule and a trivalent aliphatic hydrocarbon group having three or more carbon atoms, wherein the three hydroxyl groups are bonded to the trivalent aliphatic hydrocarbon group, and at least one, or all, of the three hydroxyl groups are secondary hydroxyl groups, and/or

a polyoxyalkylene triol B2 which has a number average molecular weight of 1200 or less and which has three hydroxyl groups per molecule and a trivalent polyoxyalkylene group, wherein the three hydroxyl groups independently form -R-OH moieties (the R moieties independently denote divalent alkylene groups), at least one, or all, of the three hydroxyl groups are secondary hydroxyl groups, and the -R-OH moieties are bonded to the trivalent polyoxyalkylene group, and

more preferably contains the aliphatic hydrocarbon-based triol B 1.

From the perspectives of the present invention achieving a superior effect, adhesion development performance being excellent and an obtained cured product exhibiting excellent physical properties (for example, fracture elongation), the aliphatic hydrocarbon-based triol B1 preferably contains a compound in which at least one hydroxyl group is bonded to a carbon atom at each terminal of a straight chain trivalent aliphatic hydrocarbon group and the remaining hydroxyl groups are bonded to carbon atoms other than carbon atoms at each terminal of the aliphatic hydrocarbon group. Hydroxyl groups that are bonded to a carbon atom at each terminal of the aliphatic hydrocarbon group correspond to primary hydroxyl groups, and the remaining hydroxyl groups that are bonded to carbon atoms other than carbon atoms at each terminal of the aliphatic hydrocarbon group correspond to secondary hydroxyl groups.

Examples of the low molecular weight polyol B include aliphatic hydrocarbon-based triols B1, such as glycerin, 1,2,4-butane triol, 1,2,6-hexane triol, 1,3,6-hexane triol and 1,2,8-octane triol; and
polyoxyalkylene triols B2, such as polyoxypropylene having three $-CH_2-CH(CH_3)-OH$ groups at terminals.

From the perspectives of the present invention achieving a superior effect, adhesion development performance being excellent and an obtained cured product exhibiting excellent physical properties (for example, fracture elongation), the aliphatic hydrocarbon-based triol B1 preferably includes glycerin and/or 1,2,4-butane triol, and more preferably includes glycerin.

(Amount of hydroxyl groups in low molecular weight polyol B)

· Of the total amount of hydroxyl groups in low molecular weight polyols A and B, the amount of hydroxyl groups in low molecular weight polyol B is preferably 3.0-90.0 mol%, more preferably 3.0-30.0 mol%, further preferably 5.0-20.0 mol%, and yet more preferably 8.0-15.0 mol%, of the total amount of hydroxyl groups in low molecular weight polyol A and low molecular weight polyol B from the perspectives of the present invention achieving a superior effect, adhesion development performance being excellent and physical properties of an obtained cured product (for example, fracture elongation) being excellent.

· Of the total amount of hydroxyl groups in the high molecular weight polyol and low molecular weight polyol

B, the amount of hydroxyl groups in low molecular weight polyol B is preferably 30-90 mol%, more preferably 30-80 mol%, further preferably 35-70 mol%, and yet more preferably 45-60 mol% of the total amount of hydroxyl groups in the high molecular weight polyol and low molecular weight polyol B from the perspectives of the present invention achieving a superior effect, adhesion development performance being excellent and physical properties of an obtained cured product (for example, fracture elongation).

(Polyamine)

From the perspective of the present invention achieving a superior effect, the curing agent (in a broad sense) in the composition of the present invention preferably further contains a polyamine as a curing agent in a narrow sense.
A polyamine is a compound having a plurality of amino groups ($-NH_2$) and/or imino groups (-NH-) per molecule.
The polyamine has amino groups ($-NH_2$) and/or imino groups (-NH-) as isocyanate-reactive groups.
It should be noted that the polyamine does not encompass catalysts which are described later.
Examples of the polyamine include aliphatic polyamines such as diethylenetriamine, diethylaminopropylamine and triethylenetetramine;

aromatic polyamines such as diaminodiphenylmethane, diaminodiphenylsulfone and benzidine; and
polyether polyamines (polyamines in which the main chain is a polyether).

Of these, the polyamine is preferably a polyether polyamine, and is more preferably polyoxypropylenediamine. A compound in which one amino group is bonded to each terminal of polyoxypropylene can be given as an example of a preferred embodiment of a polyoxypropylenediamine.

· Content of polyamine

In a case where the curing agent further includes a polyamine as a curing agent in a narrow sense, the content of the polyamine is preferably 0.5-5.0 mass% of the total amount of the curing agent in a narrow sense from the perspective of the present invention achieving a superior effect.

(Catalyst)

The curing agent in the composition of the present invention preferably further contains a catalyst. The catalyst is not particularly limited as long as this can accelerate a reaction of an isocyanate group. Examples of the catalyst include metal catalysts such as organotin catalysts and organobismuth catalysts; and amine-based catalysts such as tertiary amine-based compounds.
From the perspectives of the present invention achieving a superior effect, adhesion development performance being excellent and an obtained cured product exhibiting excellent physical properties, the catalyst preferably includes an organotin catalyst and/or an amine-based catalyst, and more preferably includes an organotin catalyst and an amine-based catalyst.

· Organotin catalyst

A case where the catalyst includes an organotin catalyst is preferred from the perspective of being able to rapidly achieve adhesive properties in an initial stage when the main agent and the curing agent are mixed.
Examples of organotin catalysts include dialkyl tin dicarboxylate compounds such as dibutyl tin dilaurate, dibutyl tin dioctate, dioctyl tin diacetate, dioctyl tin distearate and dioctyl tin dilaurate; dialkyl tin dialkoxide compounds; divalent tin compounds such as tin octylate, tin naphthenate, tin stearate and tin versatate; dialkyl tin dialkylmercaptide compounds; and dialkyl tin bis(thioglycolate) compounds.
In cases where the organotin catalyst has alkyl groups directly bonded to tin (for example, dialkyl tin dicarboxylate compounds and dialkyl tin bis(thioglycolate) compounds), the number of carbon atoms in the alkyl groups is preferably 6 or more, and more preferably 8-12.
From the perspective of the present invention achieving a superior effect, a ligand that coordinates to tin in the organotin catalyst preferably has a sulfur atom as a coordinating atom that coordinates to tin.
Examples of compounds having a sulfur atom as a coordinating atom in the organotin catalyst include dialkyl tin dialkylmercaptide compounds and dialkyl tin bis(thioglycolate) compounds.
Examples of dialkyl tin dialkylmercaptide compounds include compounds represented by formula (2) below.

$$(R_{21})_2\text{-Sn-}(S\text{-}R_{22})_2 \qquad (2)$$

In formula (2), $R_{21}$ and $R_{22}$ each independently denote an alkyl group. The two $R_{21}$ groups may be the same as, or different from, each other. The same is true for $R_{22}$. The alkyl groups are not particularly limited.

Specific examples of dialkyl tin dialkylmercaptide compounds include dibutyl tin dioctylmercaptide, dioctyl tin dioctylmercaptide, dibutyl tin didodecylmercaptide and dioctyl tin didodecylmercaptide.

Examples of dialkyl tin bis(thioglycolate) compounds include compounds represented by formula (3) below.

$$(R_{31})_2\text{-Sn-}(S\text{-}CH_2\text{-}CO\text{-}O\text{-}R_{32})_2 \qquad (3)$$

In formula (3), $R_{31}$ and $R_{32}$ each independently denote an alkyl group. The two $R_{31}$ groups may be the same as, or different from, each other. The same is true for $R_{32}$. The alkyl groups are not particularly limited.

Specific examples of dialkyl tin bis(thioglycolate) compounds include dibutyl tin bis(octylthioglycolate) and dioctyl tin bis(octylthioglycolate).

From the perspective of the present invention achieving a superior effect, the organotin catalyst is preferably an organotin catalyst in which a ligand that coordinates to tin has a sulfur atom as a coordinating atom that coordinates to tin, is more preferably a dialkyl tin dicarboxylate compound and/or a dialkyl tin bis(thioglycolate) compound, is further preferably a dialkyl tin bis(thioglycolate) compound, and is yet more preferably dioctyl tin bis(octylthioglycolate).

· Amine-based catalyst

Examples of amine-based catalysts include tertiary amine compounds. A tertiary amine compound is a compound having a tertiary amino group (in which three carbon atoms are bonded to a nitrogen atom, and no hydrogen atoms are bonded to the nitrogen atom). Examples of tertiary amine compounds include 1,4-diazabicyclo[2.2.2]octane, 2,4,6-tris(dimethylaminomethyl)phenol, 2-methyltriethylenediamine and compounds having a dimorpholinodiethyl ether structure.

From the perspective of the present invention achieving a superior effect, the tertiary amine compound preferably includes a dimorpholinodiethyl ether structure.

A dimorpholinodiethyl ether structure is a structure having a dimorpholinodiethyl ether as the basic structure.

In the dimorpholinodiethyl ether structure, hydrogen atoms on a morpholine ring may be substituted with substituent groups. The substituent groups are not particularly limited. Examples thereof include alkyl groups. Examples of alkyl groups include methyl groups and ethyl groups.

Examples of amine-based catalysts having a dimorpholinodiethyl ether structure include compounds represented by formula (9) below.

[Compound 1]

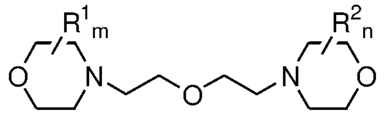

(9)

In formula (9), $R^1$ and $R^2$ are each independently an alkyl group, and m and n are each independently 0, 1 or 2.

Specific examples of amine-based catalysts including a dimorpholinodiethyl ether structure include dimorpholinodiethyl ether (DMDEE), di(methylmorpholino)diethyl ether and di(dimethylmorpholino)diethyl ether.

From the perspective of the present invention achieving a superior effect, the tertiary amine compound preferably includes dimorpholinodiethyl ether (DMDEE).

From the perspective of the present invention achieving a superior effect, the content of the catalyst (in cases where the catalyst includes a plurality of compounds, the total content of the plurality of compounds) is preferably 0.001-1.0 mass% of the total amount of curing agent in the composition of the present invention.

In cases where the catalyst includes an organotin catalyst and an amine-based catalyst, the mass ratio of the organotin catalyst and the amine-based catalyst is preferably 1-100 parts by mass of the amine-based catalyst relative to 1 part by mass of the organotin catalyst from the perspective of the present invention achieving a superior effect.

(Other components)

The urethane adhesive composition of the present invention can, if necessary, contain other additives as long as the purpose of the present invention is not impaired. Examples of these additives include plasticizers, fillers, silane

coupling agents, adhesion-imparting agents, anti-aging agents, antioxidants, pigments, thixotropy-imparting agents, ultraviolet radiation absorbers, flame retardants, surfactants, dispersing agents, dehydrating agents such as zeolites, and anti-static agents. Amounts of additives can be decided as appropriate. These additives can be added to the main agent and/or the curing agent.

(Filler)

The composition of the present invention can contain a filler in the main agent and/or the curing agent. The filler does not include zeolites which are described later.
Examples of the filler include carbon black, calcium carbonate, clay, silica and talc. The filler may be surface-treated using a surface treatment agent such as a fatty acid, a resin acid, a urethane compound or a fatty acid ester.
From the perspective of the present invention achieving a superior effect, the filler is preferably carbon black and/or clay.
The carbon black and clay are not particularly limited. For example, conventional well-known types can be used.

· Content of filler

In cases where the main agent further contains a filler, the content of the filler in the main agent is preferably 10-60%, and more preferably 15-50 mass%, of the total amount of the main agent from the perspective of the present invention achieving a superior effect.
In cases where the curing agent in the composition of the present invention further contains a filler, the content of the filler in the curing agent is preferably 10-60%, and more preferably 25-45 mass%, of the total amount of the curing agent from the perspective of the present invention achieving a superior effect.

(Zeolite)

The composition of the present invention can also contain a zeolite. If the composition of the present invention further contains a zeolite, it is possible to absorb moisture in the system and suppress reactions between water and isocyanate groups in the polyisocyanate component in an initial stage when the main agent and the curing agent are mixed.
A case where the curing agent in the composition of the present invention further contains zeolite can be given as an example of a preferred embodiment.
Zeolite is a generic term for crystalline aluminosilicates, but the zeolite in the present invention is not particularly limited. For example, a conventional well-known zeolite can be used.

· Content of zeolite

In cases where the curing agent in the composition of the present invention further contains a zeolite, the content of the zeolite is preferably 3 mass% or more, and more preferably 4-10 mass%, of the total amount of the curing agent from the perspective of the present invention achieving a superior effect.

(Preparation of main agent)

The main agent in the composition of the present invention can be prepared by, for example, mixing the essential components mentioned above and additives that can be additionally used if necessary.

(Preparation of curing agent)

The curing agent in the composition of the present invention can be prepared by, for example, mixing the essential components mentioned above and catalysts and additives that can be additionally used if necessary.

(Usage method)

When the composition of the present invention is used, it is possible to mix the main agent and the curing agent at a mixing ratio (volume ratio) and isocyanate-reactive group/NCO ratio mentioned later.

Main agent: curing agent volume ratio

From the perspectives of the present invention achieving a superior effect, adhesion development performance

being excellent and an obtained cured product exhibiting excellent physical properties, it is preferable to use the main agent and the curing agent at a main agent: curing agent volume ratio of 1.0:1.0 when the composition of the present invention is used.

In the present specification, a main agent: curing agent volume ratio of 1.0 : 1.0 is referred to as a normal mixing ratio, and a volume ratio of 1.0 : more than 1.0 is referred to as an abnormal mixing ratio. In the present invention, a volume ratio of 1.0 : less than 1.0 can be treated as a normal mixing ratio.

(Isocyanate-reactive group/NCO ratio)

In the present specification, the molar ratio of isocyanate-reactive groups in the curing agent in the composition of the present invention (or the curing agent in a narrow sense) relative to the total amount of isocyanate groups in the main agent is referred to as the "isocyanate-reactive group/NCO ratio".

From the perspective of the effect achieved by the present invention, the isocyanate-reactive group/NCO ratio can be, for example, 1.1 or less when the composition is used.

From the perspectives of the present invention achieving a superior effect, adhesion development performance being excellent and an obtained cured product exhibiting excellent physical properties (especially elastic modulus), the isocyanate-reactive group/NCO ratio in the composition of the present invention (for example, the isocyanate-reactive group/NCO ratio when the composition of the present invention is used) is preferably 0.8-1.1, and more preferably 0.9-1.05.

Relationship between main agent : curing agent volume ratio and isocyanate-reactive group/NCO ratio

From the perspectives of the present invention achieving a superior effect, adhesion development performance being excellent, an obtained cured product exhibiting excellent physical properties and the composition of the present invention being produced as designed, the composition of the present invention preferably has an isocyanate-reactive group/NCO ratio of 1.0 or less, and more preferably 0.8-1.0, in a two-liquid state prior to use at a normal mixing ratio for the volume ratio of the main agent and the curing agent.

In addition, from the perspective of the effect achieved by the present invention, the upper limit of the isocyanate-reactive group/NCO ratio can be 1.1 or less if the volume ratio of the main agent and the curing agent (main agent : curing agent) is 1.0 : 1.1 or less when the composition of the present invention is used.

From the perspectives of the present invention achieving a superior effect, adhesion development performance being excellent and an obtained cured product exhibiting excellent physical properties, the isocyanate-reactive group/NCO ratio is preferably 0.95-1.1 if the volume ratio mentioned above is 1.0 : 0.9-1.1 when the composition of the present invention is used.

Examples of substrates to which the composition of the present invention can be applied include plastics, glasses, rubbers and metals (including coated sheets and electrodeposition-coated steel sheets).

Examples of plastics include polymers of propylene-based, ethylene-based and cycloolefin-based monomers. These polymers may be homopolymers, copolymers or hydrogenated polymers.

Specific examples of plastics include olefin resins such as polypropylene and polyethylene, polyester resins such as poly(ethylene terephthalate) (PET) and poly(butylene terephthalate) (PBT), and flame retardant resins such as poly(methyl methacrylate) resins (PMMA resins), polycarbonate resins, polystyrene resins, acrylonitrile·styrene copolymer resins, poly(vinyl chloride) resins, acetate resins, ABS resins (acrylonitrile-butadiene-styrene resins) and polyamide resins.

The substrate may be surface-treated. Examples of surface treatments include flame treatments, corona treatments, ITRO treatments and primer treatments. These treatments are not particularly limited. For example, conventional well-known treatments can be used.

The method for applying the composition of the present invention to a substrate is not particularly limited. For example, a conventional well-known method can be used.

· Curing conditions

The composition of the present invention can be cured by mixing the main agent with the curing agent.

It is possible to mix the main agent with the curing agent, as mentioned above, and then age the obtained mixture. Examples of conditions for the aging include a relative humidity of 20-80% and a temperature of 5-45°C.

After the composition of the present invention is cured, a polyurethane-based cured product can be obtained.

· Elastic modulus after complete curing

From the perspective of the present invention achieving a superior effect, the elastic modulus of a cured product after the composition of the present invention has been completely cured is preferably 15 MPa or more, and more preferably 20-300 MPa.

In the present invention, the composition of the present invention can be completely cured by leaving the composition of the present invention for 7 days at a temperature of 23°C and a relative humidity of 50%.

The elastic modulus of a cured product after the composition of the present invention has been completely cured in the manner described above is a tensile elastic modulus (units: MPa) measured by carrying out a tensile test (at a pulling speed of 200 mm/min) at a temperature of 23°C in accordance with JIS K6850:1999.

**Working Examples**

The present invention will now be described in greater detail through the use of working examples. However, the present invention is not limited to these.

<Main agent>

· Preparation of urethane prepolymer 1

A urethane prepolymer 1 (a polyisocyanate component) was prepared by reacting a mixture of a polyol 1-1 (100 parts by mass) and a polyisocyanate A-1 (168.8 parts by mass) for 5 hours at 80°C.

In the preparation of urethane prepolymer 1, the molar ratio of isocyanate groups in polyisocyanateA-1 relative to all hydroxyl groups in polyol 1-1 (NCO groups/OH groups) was 19.9.

Urethane prepolymer 1, which was prepared in the manner described above, was used as-is in the preparation of the main agent.

· Preparation of main agent

The main agent was produced by adding a filler 1 (67.2 parts by mass) to urethane prepolymer 1, which was prepared in the manner described above, and mixing these using a stirring machine. The main agent prepared in the manner described above was denoted as main agent formulation no. 1.

· Preparation of urethane prepolymer 2

A urethane prepolymer 2 (a polyisocyanate component) was prepared by reacting a mixture of polyol 1-1 (100 parts by mass), a plasticizer (DINP; 67.5 parts by mass) and polyisocyanate A-1 (112.4 parts by mass) for 5 hours at 80°C.

In the preparation of urethane prepolymer 2, the molar ratio of isocyanate groups in polyisocyanate A-1 relative to all hydroxyl groups in polyol 1-1 (NCO groups/OH groups) was 13.3.

Urethane prepolymer 2, which was prepared in the manner described above, was used as-is in the preparation of the main agent.

· Preparation of main agent

The main agent was produced by adding filler 1 (70.0 parts by mass) to urethane prepolymer 2, which was prepared in the manner described above, and mixing these using a stirring machine. The main agent prepared in the manner described above was denoted as main agent formulation no. 2.

Details of components used in the preparation of the main agent are as follows.

(Polyol 1)

· Polyol 1-1: Polyoxypropylene triol having three hydroxyl groups per molecule and having a number average molecular weight of 5000. EXCENOL 5030 produced by AGC.

(Polyisocyanate A)

· Polyisocyanate A-1 : Carbodiimide-modified product of MDI. Coronate MX produced by Tosoh Corporation. Two isocyanate groups per molecule.

- Plasticizer: DINP (diisononyl phthalate)
- Filler 1: ISAF grade carbon black

(Calculation of isocyanate group content in total amount of main agent)

The isocyanate group content in the total amount of the main agent was calculated using the NCO amount calculation method described above.

For urethane prepolymers 1 and 2 (polyisocyanate components) obtained by means of the urethane prepolymer preparation described above, the isocyanate group content (mass%) in the polyisocyanate component was measured in accordance with method A in JIS K-1603-1:2007 using a potentiometric titration apparatus.

The isocyanate group content in urethane prepolymer 1 was 17.3 mass%. From this result, the isocyanate group content in the total amount of main agent formulation no. 1 was calculated to be 13.8 mass%.

The isocyanate group content in urethane prepolymer 2 was 10.8 mass%. From these results, the isocyanate group content in the total amount of main agent formulation no. 2 was calculated to be 8.6 mass%.

<Curing agent>

A curing agent was produced by using a stirring machine to mix components listed in the "Curing agent" column in Table 1 below at a composition (parts by mass) shown in the same table.

For curing agent 9, the "Proportion (mol%) of amount of hydroxyl groups in low molecular weight polyol B in total amount of hydroxyl groups in low molecular weight polyol A and low molecular weight polyol B" column indicates "Proportion (mol%) of amount of hydroxyl groups in low molecular weight polyol B in total amount of hydroxyl groups in low molecular weight polyol A and relatively low molecular weight polyol B". In addition, for curing agent 9, the "Proportion (mol%) of amount of hydroxyl groups in low molecular weight polyol B in total amount of hydroxyl groups in high molecular weight polyol and low molecular weight polyol B" column indicates "Proportion (mol%) of amount of hydroxyl groups in low molecular weight polyol B in total amount of hydroxyl groups in high molecular weight polyol and relatively low molecular weight polyol B".

Details of components listed in the "Curing agent" column in Table 1 are as follows.

(High molecular weight polyol)

· High molecular weight polyol: polyoxyalkylene triol which has three hydroxyl groups per molecule and has a number average molecular weight of 6000, and in which ethylene oxide is added to a terminal. PREMINOL 7001K produced by AGC.

(Low molecular weight polyol A)

· 1,4-butane diol: produced by Mitsubishi Chemical Corporation (molecular weight 90)
· 1,2-ethylene glycol: produced by Tokyo Chemical Industry Co., Ltd. (molecular weight 62)

(Low molecular weight polyol B)

· Glycerin: produced by Kao Corporation (molecular weight 92)
· 1,2,4-butane triol: produced by Tokyo Chemical Industry Co., Ltd. (molecular weight 106)
· Polyoxypropylene triol 1-1: Polyoxypropylene triol which has three secondary hydroxyl groups per molecule and has a number average molecular weight of 1000. EXCENOL 1030 produced by AGC.
· Relatively low molecular weight polyol B: trimethylolpropane
· Polyamine: polyoxypropylene-$\alpha,\omega$-diamine. JEFFAMINE D-400 produced by Huntsman
· Filler 2: clay
· Zeolite: A type zeolite. "Zeoram A-4" produced by Tosoh Corporation
· Organotin catalyst: dioctyltin bis(octylthioglycolate) (structure shown below). Neostann U-860 produced by Nitto Kasei Co., Ltd.

[Compound 2]

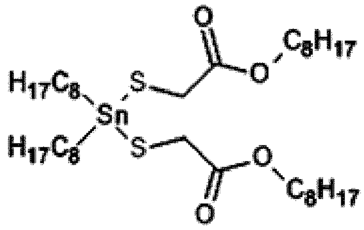

· Amine-based catalyst: DMDEE Dimorpholinodiethyl ether (produced by San-Apro Ltd.). Structure shown below.

[Compound 3]

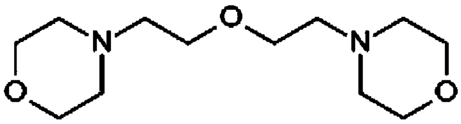

<Production of two-liquid type urethane adhesive composition>

A main agent and curing agent produced in the manner described above were combined according to formulation nos. shown in the "Urethane adhesive composition" shown in Table 1, and these were then stirred and mixed at a temperature of 23°C and a relative humidity of 50% at two types of volume ratio, namely a normal mixing ratio and abnormal mixing ratio shown in Table 1.

For the normal mixing ratio in working examples and comparative examples, the molar ratio of the content of isocyanate-reactive groups in the curing ratio relative to the isocyanate group content in the main agent (isocyanate-reactive group/NCO) is shown in the "Curing agent NCO-reactive group amount/main agent NCO group amount at normal mixing ratio" column.

For the abnormal mixing ratio in working examples and comparative examples, the molar ratio of the content of isocyanate-reactive groups in the curing ratio relative to the isocyanate group content in the main agent is shown in the "Curing agent NCO-reactive group amount/main agent NCO group amount at abnormal mixing ratio" column.

<Evaluations>

Urethane adhesive compositions mixed in the manner described above were evaluated in the following ways. The results are shown in Table 1.

Curing conditions for the urethane adhesive compositions are as follows.

(Curing conditions)

· Curing conditions 1

Under curing conditions 1, a urethane adhesive composition was cured by being left for 24 hours at a temperature of 23°C and a relative humidity of 50%.

· Curing conditions 2 (complete curing)

Under curing conditions 2, the urethane adhesive composition was cured by being left for 7 days at a temperature of 23°C and a relative humidity of 50%. In the present invention, curing conditions for achieving complete curing are denoted as curing conditions 2.

(Fracture properties)

Urethane adhesive compositions mixed in the manner described above were cured under curing conditions 2, and dumbbell-shaped no. 3 type test pieces (thickness 2 mm) were cut from the obtained cured products.

Using these test pieces, dumbbell fracture strength, dumbbell fracture elongation and elastic modulus (tensile elastic modulus) were measured by carrying out a tensile test in accordance with JIS K6251:2017 at a temperature of 23°C and a crosshead speed (tensile speed) of 200 mm/min.

Results are shown in the "Dumbbell fracture strength*1 (normal mixing ratio)", "Dumbbell fracture elongation*5 (normal mixing ratio)", "elastic modulus*3 (normal mixing ratio)", "Dumbbell fracture strength*2 (abnormal mixing ratio)" and "elastic modulus*4 (abnormal mixing ratio)" columns in Table 1.

· Evaluation criteria

· · Dumbbell fracture strength

Dumbbell fracture strength*1 (normal mixing ratio) is preferably 15 MPa or more, and more preferably more than 15 MPa. The same is true for Dumbbell fracture strength*2 (abnormal mixing ratio).

· · Fracture elongation

In the present invention, fracture elongation is evaluated as dumbbell fracture elongation (Dumbbell fracture elongation*5 shown in Table 1) after mixing the main agent and the curing agent at a normal mixing ratio and then completely curing the obtained mixture under curing conditions 2.

A case where the "Dumbbell fracture elongation*5" shown in Table 1 is 60% or more is evaluated as a preferred fracture elongation of an obtained cured product.

In the case mentioned above, a case where the "Dumbbell fracture elongation*5" is 75% or more is evaluated as a more preferred fracture elongation of an obtained cured product.

· · Elastic modulus (tensile elastic modulus)

Elastic modulus*3 (normal mixing ratio) is preferably 100 MPa or more, and more preferably more than 100 MPa. The same applies to Elastic modulus*4 (abnormal mixing ratio).

[Evaluation of suppression of deterioration in physical properties caused by out-of-spec mixing ratio]

In the present invention, suppression of a deterioration in physical properties caused by an out-of-spec mixing ratio (suppression of a deterioration in physical properties of an obtained cured product even if the mixing ratio of the main agent and the curing agent falls outside the designed range), which is a problem to be addressed by the present invention, was evaluated in terms of fracture strength decrease rate and elastic modulus decrease rate.

(Fracture strength decrease rate)

A formula for calculating fracture strength decrease rate is as shown below.

$$\text{Fracture strength decrease rate (\%)}=(*1-*2)/*1\times 100$$

*1: Dumbbell fracture strength*1 (normal mixing ratio) shown in Table 1

*2: Dumbbell fracture strength*2 (abnormal mixing ratio) shown in Table 1

It should be noted that in a case where the value of *2 was larger than the value of * 1, the fracture strength decrease rate was taken to be 0%.

(Elastic modulus decrease rate)

A formula for calculating elastic modulus decrease rate is as shown below.

$$\text{Elastic modulus decrease rate (\%)}=(*3-*4)/*3\times 100$$

*3: Elastic modulus*3 (normal mixing ratio) shown in Table 1

*4: Elastic modulus*4 (abnormal mixing ratio) shown in Table 1

It should be noted that in a case where the value of *4 was larger than the value of *3, the elastic modulus decrease rate was taken to be 0%.

(Evaluation criteria)

In the present invention, in a case where the fracture strength decrease rate and elastic modulus decrease rate are both 20% or less, it was evaluated that a deterioration in physical properties of an obtained cured product can be suppressed even if the mixing ratio of the main agent and the curing agent falls outside the designed range.
In such a case, as the fracture strength decrease rate and/or the elastic modulus decrease rate becomes less than 20%, it was evaluated that the deterioration in physical properties of an obtained cured product can be better suppressed.
Meanwhile, in a case where the fracture strength decrease rate or the elastic modulus decrease rate exceeded 20%, it was evaluated that a deterioration in physical properties of an obtained cured product cannot be suppressed if the mixing ratio of the main agent and the curing agent falls outside the designed range.

((Evaluation of adhesion development performance))

(Shear adhesion strength)

· Production of test sample

Two adherends (each having a width of 25 mm, a length of 70 mm and a thickness of 1.6 mm) comprising an electrodeposited sheet (electrodeposition coating material product name: GT-10LF, produced by Kansai Paint Co., Ltd.) were prepared.
Next, a surface of one of the adherends was coated with a urethane adhesive composition immediately after preparation (mixing) at a width of 25 mm (25 mm to match the width of the adherend) and a length of 10 mm (10 mm in the longitudinal direction of the adherend), this adherend was then bonded to the other adherend, and the adherends were then pressure bonded so that the thickness of the adhesive composition was 2 mm, thereby producing a test sample.
Test samples produced in the manner described above were cured under curing conditions 1 and curing conditions 2.

· Shear test

Test samples cured in the manner described above were subjected to a tensile test (at a pulling speed of 50 mm/min) at 23°C in accordance with JIS K6850:1999, and shear adhesion strength was measured.

(Shear adhesion strength development rate)

Adhesion development was evaluated on the basis of shear adhesion strength development rate (%) at a normal mixing ratio.
A mixture was obtained by mixing the urethane adhesive composition at a normal mixing ratio, the percentage ratio of shear adhesion strength following curing under curing conditions 1 relative to shear adhesion strength of the cured product after completely curing the mixture under curing conditions 2 was calculated, and this was taken to be the shear adhesion strength development rate.

Shear adhesion strength development rate (%) = shear adhesion strength following curing under curing conditions 1/shear adhesion strength following complete curing under curing conditions 2×100

(Evaluation criteria)

In the present invention, a case where the shear adhesion strength development rate was 60% or more was evaluated as a usable level in terms of adhesion development speed. A case where the shear adhesion strength development rate was 80% or more was evaluated as preferred adhesion development performance.
A case where the shear adhesion strength development rate was 90% or more was evaluated as more preferred

adhesion development performance.

A case where the shear adhesion strength development rate was less than 60% was evaluated as poor adhesion development performance.

[Table 1]

Table 1

| Curing agent | Curing agent formulation no. | 1 | 2 | 3 | 4 | 5 | 6 | 7 | 8 | 9 | 10 | 11 | 12 |
|---|---|---|---|---|---|---|---|---|---|---|---|---|---|
| High molecular weight polyol (Mn 1800 or more) | PREMINOL 7001K, trifunctional, Mn 6000 | 100.0 | 100.0 | 100.0 | 100.0 | 100.0 | 100.0 | 100.0 | 100.0 | 100.0 | | 100.0 | 100.0 |
| Low molecular weight polyol A (diol, Mn 200 or less) | 1,4-butane diol | 19.9 | 21.4 | 23.0 | 16.3 | 2.8 | | 21.5 | 24.6 | 21.6 | 8.1 | 26.3 | 10.5 |
| | 1,2-ethylene glycol | | | | | | 13.7 | | | | | | |
| Low molecular weight polyol B (triol, Mn 1200 or less, secondary OH) | Glycerin | 2.9 | 2.0 | 1.0 | 1.9 | 13.7 | 1.8 | | | | 1.9 | | 1.2 |
| | 1,2,4-butane triol | | | | | | | 2.3 | | | | | |
| | Polyoxypropylene triol | | | | | | | | | | 100.0 | 15.4 | |
| Relatively low molecular weight polyol B | Trimethylolpropane | | | | | | | | | 2.9 | | | |
| Polyamine | JFFAMINE D-400 | 2.3 | 2.3 | 2.3 | 2.2 | 2.2 | 2.1 | 2.3 | 2.3 | 2.3 | 2.0 | 2.6 | 2.0 |
| Filler 2 | Clay | 91.3 | 91.8 | 92.2 | 88.7 | 86.6 | 85.9 | 92.0 | 92.6 | 92.6 | 81.8 | 105.4 | 72.8 |
| Zeolite | Zeoram A-4 | 11.4 | 11.5 | 11.5 | 11.1 | 10.8 | 10.7 | 11.5 | 11.6 | 11.6 | 10.2 | 13.2 | 9.8 |
| Organotin catalyst | U-860 | 0.011 | 0.011 | 0.012 | 0.011 | 0.011 | 0.011 | 0.012 | 0.012 | 0.012 | 0.010 | 0.013 | 0.012 |
| Amine-based catalyst | DMDEE | 0.457 | 0.459 | 0.461 | 0.444 | 0.433 | 0.430 | 0.460 | 0.463 | 0.463 | 0.409 | 0.527 | 0.393 |
| Proportion (mol%) of amount of hydroxyl groups in low molecular weight polyol B in total amount of hydroxyl groups in low molecular weight polyol A and low molecular weight polyol B | | 17.8% | 11.9% | 5.9% | 14.5% | 88.0% | 12.0% | 11.9% | 0.0% | 12.0% | 25.7% | 7.0% | 13.1% |
| Proportion (mol%) of amount of hydroxyl groups in low molecular weight polyol B in total amount of hydroxyl groups in high molecular weight polyol and low molecular weight polyol B | | 65.7% | 56.2% | 39.2% | 55.1% | 89.9% | 54.6% | 56.3% | 0.0% | 56.6% | 17.8% | 46.8% | 41.1% |

[Table 2]

Continuation of table 1

| Urethane adhesive composition | | | Working Example | Working Example | Working Example | Working Example | Working Example | Working Example | Working Example | Comparative Example | Comparative Example | Comparative Example | Working Example | Working Example |
|---|---|---|---|---|---|---|---|---|---|---|---|---|---|---|
| | | | 1 | 2 | 3 | 4 | 5 | 6 | 7 | 1 | 2 | 3 | 8 | 9 |
| Main agent formulation no | | | 1 | 1 | 1 | 1 | 1 | 1 | 1 | 1 | 1 | 1 | 1 | 2 |
| Curing agent formulation no | | | 1 | 2 | 3 | 4 | 5 | 6 | 7 | 8 | 9 | 10 | 11 | 12 |
| Normal mixing ratio (main agent : curing agent = 1.0 : 1.0 (volume ratio)) | Curing agent NCO-reactive group amount/main agent NCO group amount (molar ratio) at normal mixing ratio | | 0.95 | 0.95 | 0.95 | 0.80 | 0.95 | 0.95 | 0.95 | 0.95 | 0.95 | 0.95 | 0.95 | 0.95 |
| | After complete curing | Dumbbell fracture strength*1 (MPa) | 21 | 20 | 19 | 21 | 21 | 17 | 19 | 18 | 21 | 27 | 19.4 | 12 |
| | | Dumbbell fracture elongation*5 (%) | 81% | 80% | 85% | 80% | 60% | 80% | 65% | 70% | 85% | 90% | 70% | 155% |
| | | Elastic modulus*3 (MPa) | 195 | 200 | 190 | 155 | 125 | 115 | 190 | 190 | 195 | 80 | 185 | 29 |
| Abnormal mixing ratio (main agent : curing agent = 1.0 : 1.1 (volume ratio)) | Curing agent NCO-reactive group amount/main agent NCO group amount (molar ratio) at abnormal mixing ratio | | 1.05 | 1.05 | 1.05 | 0.88 | 1.05 | 1.05 | 1.05 | 1.05 | 1.05 | 1.05 | 1.05 | 1.05 |
| | After complete curing | Dumbbell fracture strength*2 (MPa) | 18 | 17 | 16 | 20 | 23 | 17 | 18 | 14 | 17 | 22 | 15.9 | 11 |
| | | Elastic modulus*4 (MPa) | 160 | 175 | 170 | 150 | 150 | 120 | 180 | 145 | 140 | 40 | 160 | 24 |
| Suppression of deterioration in physical properties caused by out-of-spec mixing ratio | Fracture strength decrease rate (%) | = (*1 − *2) / *1 ×100 | 15% | 15% | 17% | 2% | 0% | 0% | 4% | 23% | 22% | 16% | 18% | 13% |
| | | | ○ | ○ | ○ | ○ | ○ | ○ | ○ | × | × | ○ | ○ | ○ |
| | Elastic modulus decrease rate (%) | = (*3 − *4) / *3 ×100 | 16% | 13% | 10% | 3% | 0% | 0% | 6% | 25% | 29% | 51% | 12% | 18% |
| | | | ○ | ○ | ○ | ○ | ○ | ○ | ○ | × | × | × | ○ | ○ |
| Adhesion development performance | Shear adhesion strength development rate (%) | Percentage ratio of shear adhesion strength following curing under curing conditions 1 relative to shear adhesion strength following curing under curing conditions 2 at normal mixing ratio | 100% | 98% | 92% | 66% | 80% | 67% | 94% | 100% | 92% | 91% | 93% | 100% |

In view of results shown in Table 1, Comparative Example 1, in which the curing agent did not contain the low molecular weight polyol B, could not suppress a deterioration in physical properties of an obtained cured product if the mixing ratio of the main agent and the curing agent fell outside the designed range.

Comparative Example 2, in which the curing agent did not contain the low molecular weight polyol B but instead contained trimethylolpropane (which does not have a secondary hydroxyl group), could not suppress a deterioration in physical properties of an obtained cured product if the mixing ratio of the main agent and the curing agent fell outside the designed range.

Comparative Example 3, in which the curing agent did not contain a prescribed high molecular weight polyol, could not suppress a deterioration in physical properties of an obtained cured product if the mixing ratio of the main agent and the curing agent fell outside the designed range.

However, even if the mixing ratio of the main agent and the curing agent in the urethane adhesive composition of the present invention falls outside the designed range, it is possible to suppress a deterioration in physical properties of an obtained cured product. In addition, among the urethane adhesive compositions of the present invention, Working Examples 1-3 and 5-9, in which the curing agent NCO-reactive group amount/main agent NCO group amount (molar ratio) was 0.90 or more at a normal mixing ratio, were superior to Working Example 4 in terms of adhesion development performance speed and adhesion development performance.

## Claims

**1.** A two-liquid type urethane adhesive composition comprising a main agent and a curing agent, wherein

the main agent contains a polyisocyanate component, and the isocyanate group content in the main agent is 5 mass% or more of the total amount of the main agent,
the curing agent contains a compound having a plurality of active hydrogen-containing groups per molecule, and the compound having a plurality of active hydrogen-containing groups per molecule comprises:

a high molecular weight polyol having 2-3 hydroxyl groups per molecule and having a number average molecular weight of 1800 or more,
a low molecular weight polyol A having two hydroxyl groups per molecule and having a number average molecular weight of 200 or less, and
a low molecular weight polyol B having three hydroxyl groups per molecule, with at least one, or all, of the three hydroxyl groups being secondary hydroxyl groups, and having a number average molecular weight of 1200 or less.

**2.** The urethane adhesive composition according to claim 1, wherein the low molecular weight polyol B contains:

an aliphatic hydrocarbon-based triol B1 which has a number average molecular weight of 1200 or less and which has three hydroxyl groups per molecule and a trivalent aliphatic hydrocarbon group having three or more carbon atoms, wherein the three hydroxyl groups are bonded to the trivalent aliphatic hydrocarbon group, and at least one, or all, of the three hydroxyl groups are secondary hydroxyl groups, and/or
a polyoxyalkylene triol B2 which has a number average molecular weight of 1200 or less and which has three hydroxyl groups per molecule and a trivalent polyoxyalkylene group, wherein the three hydroxyl groups independently form -R-OH moieties, the R moieties independently denote divalent alkylene groups, at least one, or all, of the three hydroxyl groups are secondary hydroxyl groups, and the -R-OH moieties are bonded to the trivalent polyoxyalkylene group.

**3.** The urethane adhesive composition according to claim 1 or claim 2, wherein the low molecular weight polyol B contains glycerin.

**4.** The urethane adhesive composition according to any one of claims 1-3, wherein the low molecular weight polyol A contains an alkane diol.

**5.** The urethane adhesive composition according to any one of claims 1-4, wherein the low molecular weight polyol A contains 1,4-butane diol.

**6.** The urethane adhesive composition according to any one of claims 1-5, wherein the polyisocyanate component contains at least one type selected from the group consisting of a urethane prepolymer, diphenylmethane diisocyanate, a polymeric MDI and a modified MDI.

7. The urethane adhesive composition according to any one of claims 1-6, wherein the high molecular weight polyol contains a polyoxyalkylene polyol which has three hydroxyl groups per molecule and has a number average molecular weight of 4800 or more.

8. The urethane adhesive composition according to any one of claims 1-7, wherein the amount of hydroxyl groups in the low molecular weight polyol B is 3.0-90.0 mol% of the total amount of hydroxyl groups in the low molecular weight polyol A and the low molecular weight polyol B.

9. The urethane adhesive composition according to any one of claims 1-8, wherein the molar ratio of isocyanate-reactive groups in the curing agent relative to all isocyanate groups in the main agent (isocyanate-reactive groups/NCO) is 0.8-1.1.

10. The urethane adhesive composition according to any one of claims 1-9, wherein the amount of hydroxyl groups in the low molecular weight polyol B is 30-90 mol% of the total amount of hydroxyl groups in the high molecular weight polyol and the low molecular weight polyol B.

11. The urethane adhesive composition according to any one of claims 1-10, wherein the elastic modulus following complete curing is 15 MPa or more.

## INTERNATIONAL SEARCH REPORT

International application No.
**PCT/JP2022/008894**

**A. CLASSIFICATION OF SUBJECT MATTER**

***C09J 175/04***(2006.01)i; ***C08G 18/10***(2006.01)i; ***C08G 18/32***(2006.01)i; ***C08G 18/48***(2006.01)i; ***C08G 18/65***(2006.01)i; ***C08G 18/76***(2006.01)i
FI: C09J175/04; C08G18/65 011; C08G18/10; C08G18/76 057; C08G18/48 004; C08G18/32 003

According to International Patent Classification (IPC) or to both national classification and IPC

**B. FIELDS SEARCHED**

Minimum documentation searched (classification system followed by classification symbols)

C09J175/04; C08G18/10; C08G18/32; C08G18/48; C08G18/65; C08G18/76

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 62-290782 A (MOBAY CORP.) 17 December 1987 (1987-12-17)<br>claims, examples, page 6, upper right column | 1-11 |
| X | CN 108329452 A (HEFEI ANLI POLYURETHANE NEW MATERIAL CO., LTD.) 27 July 2018 (2018-07-27)<br>claims, examples | 1-6, 8-11 |
| A | claims, examples | 7 |
| X | CN 107722911 A (WENZHOU BAOLU NEW MATERIAL CO., LTD.) 23 February 2018 (2018-02-23)<br>claims, examples | 1-6, 8-9, 11 |
| A | | 7, 10 |
| X | WO 2017/104639 A1 (DIC CORP.) 22 June 2017 (2017-06-22)<br>claims, examples, paragraphs [0038], [0045] | 1-6, 8-11 |
| A | claims, examples, paragraphs [0038], [0045] | 7 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 May 2022** | **24 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (January 2015)

**INTERNATIONAL SEARCH REPORT**

International application No.
**PCT/JP2022/008894**

**C. DOCUMENTS CONSIDERED TO BE RELEVANT**

| Category* | Citation of document, with indication, where appropriate, of the relevant passages | Relevant to claim No. |
|---|---|---|
| X | WO 2020/097900 A1 (DOW GLOBAL TECNOLOGIES LLC.) 22 May 2020 (2020-05-22) claims, examples, paragraphs [0001], [0054], [0063], [0070]-[0074] | 1-6, 8-11 |
| A | claims, examples, paragraphs [0001], [0054], [0063], [0070]-[0074] | 7 |
| A | CA 2143426 A1 (BERGWERKSVERBAND GMBH) 03 March 1994 (1994-03-03) claims, examples | 1-11 |

Form PCT/ISA/210 (second sheet) (January 2015)

**INTERNATIONAL SEARCH REPORT**
**Information on patent family members**

International application No.
**PCT/JP2022/008894**

| Patent document cited in search report | Publication date (day/month/year) | Patent family member(s) | Publication date (day/month/year) |
|---|---|---|---|
| JP 62-290782 A | 17 December 1987 | CA 1279249 C | |
| | | US 4954199 A<br>claims, examples, page 6, first paragraph | |
| | | DE 3778426 A | |
| | | EP 248254 A2 | |
| | | ES 2033257 T3 | |
| CN 108329452 A | 27 July 2018 | (Family: none) | |
| CN 107722911 A | 23 February 2018 | (Family: none) | |
| WO 2017/104639 A1 | 22 June 2017 | CN 108368411 A | |
| WO 2020/097900 A1 | 22 May 2020 | AR 117104 A1 | |
| | | BR 112021009455 A2 | |
| | | CN 113166620 A | |
| | | EP 3880767 A1 | |
| | | JP 2022-518657 A | |
| | | TW 202022004 A | |
| | | US 2022/2010183 A1 | |
| CA 2143426 A1 | 03 March 1994 | AT 150042 T | |
| | | AU 4951993 A | |
| | | CN 1087661 A | |
| | | CZ 45595 A3 | |
| | | DE 4228178 A1 | |
| | | EP 656917 A1 | |
| | | PL 307609 A1 | |
| | | SK 24995 A3 | |
| | | WO 1994/004588 A1 | |
| | | ZA 936218 B | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010534741 A